# FASCICULE DE BREVET EUROPEEN

(11) **EP 3 630 539 B1**
(45) Date de publication et mention de la délivrance du brevet: **21.04.2021**
(21) Numéro de dépôt: 18731509.8
(22) Date de dépôt: 17.05.2018
(51) Int. Cl.: B60N 2/70, B60N 2/90

(54) **DISPOSITIF AVERTISSEUR PAR VIBRATIONS POUR SIEGE DE VEHICULE**
VIBRATIONSWARNUNGSSYSTEM FÜR EINEN FAHRZEUGSITZ
VIBRATION WARNING SYSTEM FOR A VEHICLE SEAT

(30) Priorité: 02.06.2017 FR 1754956
(43) Date de publication de la demande: 08.04.2020
(73) Titulaire: PSA Automobiles SA, 78300 Poissy (FR)
(72) Inventeur: DAVID, Eric, 92290 Chatenay Malabry (FR); HANSEN, Gael, 78390 Bois d'Arcy (FR)
(86) Numéro de dépôt international: PCT/FR2018/051199
(87) Numéro de publication internationale: WO 2018/220310

(56) Documents cités:
- EP-A1- 2 849 930
- DE-A1-102015 005 636

## Description

### Domaine de l'invention

La présente invention est relative à un dispositif propre à transmettre au seul conducteur d'un véhicule une information l'avertissant d'un événement extérieur en relation avec la conduite de ce véhicule, sans perturber dans l'habitacle de celui-ci le confort des autres occupants ou l'ambiance dans laquelle ils sont placés.

Elle concerne plus particulièrement un dispositif avertisseur par vibrations pour siège de véhicule automobile ainsi qu'une garniture d'assise ou de dossier de siège comportant un tel dispositif.

### Arrière-plan de l'invention

Les véhicules automobiles actuels comportent, selon des réalisations pratiques de plus en plus sophistiquées, des moyens divers qui avertissent le conducteur d'événements qui sont liés ou en rapport avec la conduite de ce véhicule, par exemple mais à titre non limitatif, du dépassement d'un seuil de vitesse autorisé, d'un surrégime pour le nombre de tours du moteur dans un rapport donné de la boîte de vitesses, de la détection de la présence d'un autre véhicule dans l'angle mort de vision du conducteur au moment d'un déboîtement de son véhicule pour dépassement d'une autre voiture roulant devant ce dernier ou franchissement d'un obstacle quelconque, d'un dépassement d'une ligne continue de marquage au sol du milieu de la chaussée dans certaines configurations du terrain, d'une limitation de la visibilité exigeant l'allumage des feux de signalisation du véhicule, d'un appel sur un téléphone portable de voiture dit à mains libres etc., voire de toute autre cause extérieure dont l'apparition soudaine ou progressive exige une réaction appropriée du conducteur.

Il est en particulier bien connu de générer, en réponse à un tel événement extérieur, un signal d'alarme de type vibratoire destiné à avertir le conducteur.

La demande internationale de brevet WO 2003/011638 divulgue ainsi un dispositif avertisseur par vibrations pour siège de véhicule automobile comportant un moteur électrique logé dans un boîtier et entraînant un axe de rotation.

Cet axe présente une extension saillant du boîtier et sur laquelle est montée une masselotte constituée d'un élément pesant fixé de façon décentrée sur cet axe de manière à créer un balourd lorsque ce dernier est entraîné en rotation par le moteur.

L'entraînement en rotation du balourd provoque des vibrations mécaniques dont l'amplitude est fonction de la vitesse d'entraînement de l'axe de ce moteur.

Le dispositif avertisseur est implanté sous la nappe d'assise du siège et fixé à cette dernière au moyen d'une bride maintenue par des vis de façon à emprisonner un fil métallique de cette nappe d'assise entre cette bride et une cale souple en appui sur le boîtier du moteur.

Du fait de son positionnement assez éloigné de l'occupant du siège, ce type de dispositif doit avoir une puissance vibratoire importante ce qui entraine un coût de revient plutôt élevé et une augmentation sensible de la masse globale du siège.

En outre, de par ses dimensions relativement importantes, il risque d'être endommagé par l'occupant du siège situé derrière le siège conducteur lorsque celui-ci glisse ses pieds sous l'assise.

Afin de palier à ces inconvénients, il est connu, notamment de la demande de brevet US 2014/0008948 un dispositif avertisseur par vibrations comportant un patch vibrant destiné à être fixé par collage sur la matelassure d'assise ou de dossier d'un siège de véhicule automobile.

Ce patch comprend une pluralité d'actionneurs vibratoires motorisés à commande électrique de type LRA (actionneur linéaire résonnant) ou ERM (actionneur à masse excentrique rotative) reliés entre eux en série ou en parallèle, ces actionneurs étant emprisonnés dans une enveloppe support souple formée par les deux portions repliées sur elles mêmes et collées l'une à l'autre d'un film textile.

Afin d'éviter notamment que les patchs montés sur la matelassure ne se décollent suite à la répétition des sollicitations s'exerçant sur eux lorsque l'occupant s'assoit et se relève du siège, des logements doivent être spécifiquement ménagés dans cette matelassure pour les recevoir ce qui les éloignent du conducteur et dégrade les prestations de ressenti vibratoires.

On connait aussi par le document DE102015005636 un agencement d'actionneur composé d'un actionneur à empilement de polymère qui a une multiplicité de couches d'un polymère diélectrique.

### Obiet et résumé de l'invention

La présente invention vise donc à améliorer la situation.

Elle propose à cet effet, un dispositif avertisseur par vibrations pour siège de véhicule comportant un patch vibrant destiné à être apposé sur la face supérieure de la matelassure d'assise ou de dossier d'un dit siège, ledit patch comprenant au moins un actionneur vibratoire à commande électrique abrité dans une enveloppe support souple ladite enveloppe support souple comportant un corps principal emprisonnant le ou lesdits actionneurs vibratoires caractérisé en ce que ladite enveloppe support souple comporte en outre au moins deux bras s'étendant depuis ledit corps principal, de part et d'autre de ce dernier, et comprenant chacun un crochet de retenue destiné à être introduit dans un évidement correspondant ménagé dans ladite matelassure pour assurer le maintien dudit corps principal contre la face supérieure de cette matelassure.

La présence de ces crochets de retenue permet d'obtenir un excellent maintien du corps principal du dispositif hébergeant le ou les actionneurs vibratoires contre la face supérieure de la matelassure d'assise ou de dossier d'un siège, de sorte à limiter les risques de déplacement et/ou de pliage du patch suite à la répétition des sollicitations s'exerçant sur lui lorsque l'occupant s'assoit et se relève du siège.

Le dispositif avertisseur selon l'invention présente en outre l'avantage d'être particulièrement simple et rapide à installer (ou à retirer en cas de dysfonctionnement) pour un opérateur.

Selon des caractéristiques préférées du dispositif selon l'invention, prises seules ou en combinaison :
- chaque dit crochet de retenue présente un profil en forme de T et comporte une âme centrale s'étendant dans le prolongement d'un bras correspondant ainsi que deux branches latérales saillant symétriquement depuis l'extrémité libre de cette âme et de part et d'autre de celle-ci ;
- ladite enveloppe comprend également une nappe s'étendant dans le prolongement dudit corps principal et prévue pour traverser une lumière ménagée dans l'épaisseur de ladite matelassure, ladite nappe emprisonnant une pluralité de conducteurs reliant le ou lesdits actionneurs vibratoires à un câble d'alimentation destiné à être implanté sous ladite matelassure ;
- que ledit câble d'alimentation porte à son extrémité opposée à ladite nappe un connecteur permettant de réaliser le branchement dudit dispositif avertisseur à un module électrique de commande implanté dans ledit véhicule ;
- ladite enveloppe est réalisée dans un matériau thermoplastique ;
- ladite enveloppe est obtenue à partir de deux films thermoplastiques superposés de manière à prendre le ou lesdits actionneurs vibratoires en sandwich, et pressés à chaud pour les souder l'un à l'autre et entrainer leur déformation de sorte à créer un logement emprisonnant le ou lesdits actionneurs vibratoires ;
- ledit patch comporte plusieurs dits actionneurs vibratoires emprisonnés dans ledit corps principal et reliés électriquement en série et/ou en parallèle par des connecteurs ; et/ou
- le ou lesdits actionneurs sont de type à polymère électromécanique (EMP).

L'invention vise également sous un second aspect une garniture d'assise ou de dossier de siège de véhicule comportant une matelassure recouverte d'une coiffe d'habillage, caractérisée en ce qu'elle comporte au moins un tel dispositif avertisseur dont le corps principal dudit patch est pris en sandwich entre la face supérieure de ladite matelassure et ladite coiffe d'habillage, ladite matelassure présentant en outre une pluralités d'évidements coopérant chacun avec un dit crochet de retenue pour assurer le maintien dudit corps principal contre la face supérieure de ladite matelassure.

Selon une caractéristique avantageuse, ladite coiffe d'habillage comprend un revêtement externe et une couche interne de mousse rapportée contre la face inférieure dudit revêtement externe pour améliorer le confort de l'occupant du siège en évitant que ce dernier ne soit gêné par la présence du patch.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 est une vue partielle en perspective d'un siège de véhicule automobile dont la garniture d'assise intègre deux dispositifs avertisseur par vibrations selon l'invention ;
- la figure 2 représente une vue en perspective de l'un des deux dispositifs avertisseurs par vibrations que comporte la garniture d'assise du siège de la figure 1 ;
- la figure 3 est une vue partielle en coupe longitudinale de la garniture assise du siège de la figure 1, prise au niveau d'un dispositif avertisseur ;
- la figure 4 représente une vue partielle en coupe transversale de la garniture assise du siège de la figure 1, prise au niveau d'un évidemment de la matelassure recevant l'un des crochets de retenue d'un dispositif avertisseur ; et
- la figure 5 est une vue de dessus d'un dispositif avertisseur selon une variante de l'invention.

### Description détaillée d'un mode de réalisation

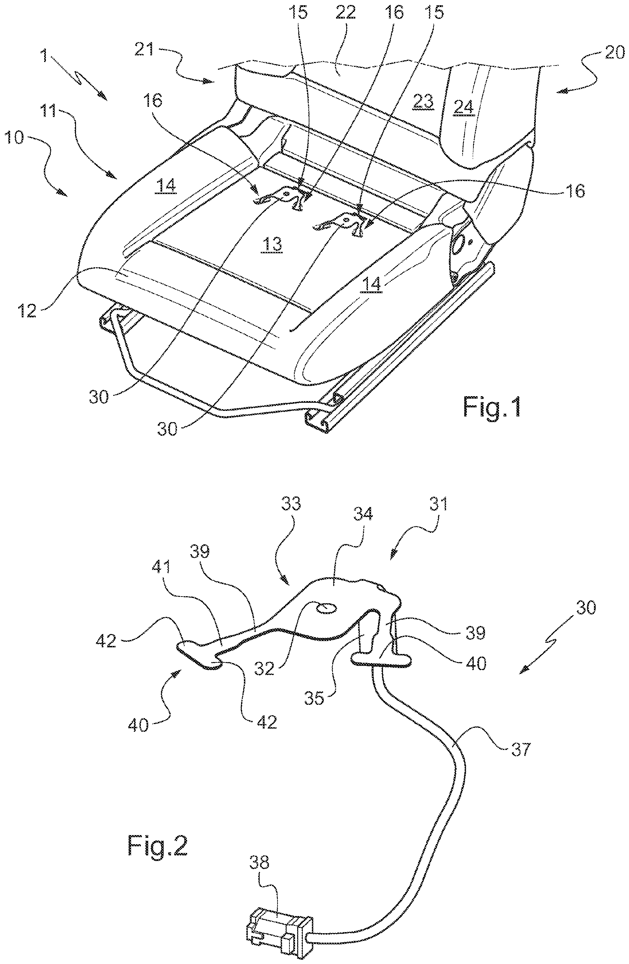

La figure 1 représente une vue partielle d'un siège 1 de véhicule automobile comportant une assise 10 sur laquelle est monté à pivotement autour d'un axe transversal un dossier 20 éventuellement surmonté d'un appuie-tête non représenté.

Comme illustré par la vue éclatée de la figure 1, l'assise 10 et le dossier 20 comprennent chacun une garniture 11, 21 fixée sur une armature correspondante généralement métallique.

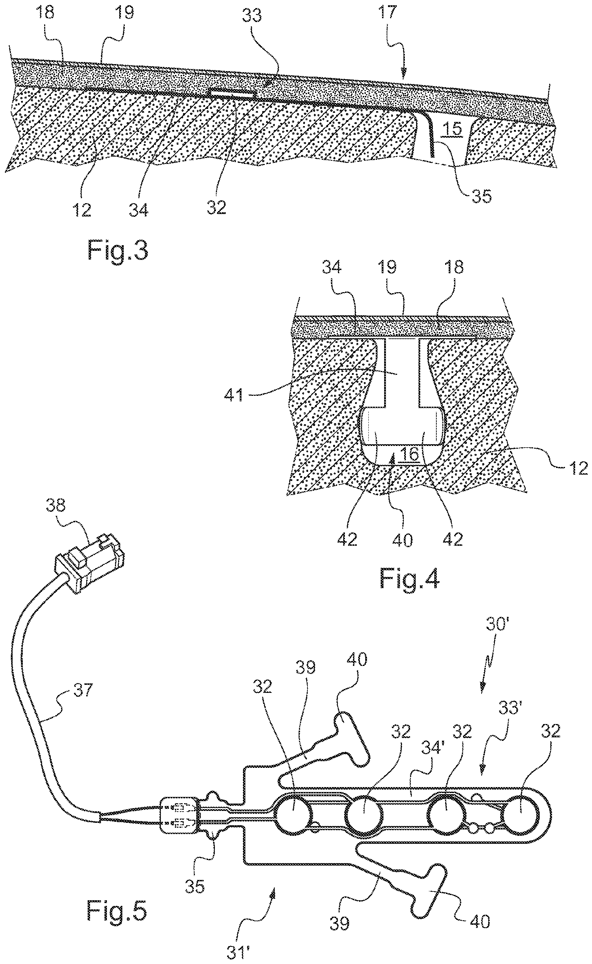

Chaque garniture 11, 21 se compose d'une matelassure interne 12, 22 constituée généralement par un bloc moulé de mousse de polyuréthane et étant recouverte d'une coiffe d'habillage (ces dernières n'étant pas représentées sur la figure 1 pour faciliter la lecture de l'invention, seule la coiffe 17 de la garniture d'assise 11 étant visible sur les figures 3 et 4).

Les matelassures 12, 22 comprennent chacune un médaillon central 13, 23 présentant une face supérieure d'accueil sensiblement plane, ainsi que deux bourrelets latéraux 14, 24 de forme convexe et étant situés de part et d'autre du médaillon correspondant.

La matelassure 12 de la garniture d'assise 11 accueille par ailleurs deux dispositifs avertisseurs par vibrations 30 selon l'invention, ces derniers étant ici disposés dans la partie arrière du médaillon central 13 de part et d'autre de son plan longitudinal médian.

On va maintenant décrire en détails l'un d'entre eux en référence à la figure 2 le représentant seul.

Le dispositif avertisseur 30 comporte un patch vibrant flexible 31 comprenant en l'espèce un unique actionneur vibratoire à commande électrique 32 de type LRA (actionneur linéaire résonnant) emprisonné dans une enveloppe support souple en plastique 33 (voir figure 3).

Un actionneur de type LRA repose sur le même principe qu'un haut-parleur. Il comporte classiquement un boîtier externe creux en forme de pastille hébergeant un ressort ondulé, une masse mobile intégrant une culasse de bobine et un aimant néodyme, une bobine acoustique, ainsi qu'un circuit imprimé flexible doté d'une ouverture recevant cette bobine.

La bobine acoustique alimentée par un courant alternatif produit un champ magnétique entrainant l'aimant néodyme et donc la masse mobile en mouvement. Le contact entre le ressort ondulé et cette masse mobile génère un effet de résonnance produisant des vibrations.

Un tel actionneur 32 dont les dimensions peuvent varier en fonction de sa puissance vibratoire, présente habituellement une épaisseur comprise entre 2 et 3,5 mm pour un diamètre variant entre 8 et 10 mm.

Sa tension nominale de fonctionnement est avantageusement comprise entre 2 et 4 V.

L'enveloppe support 33 comporte un corps principal 34 sensiblement rectangulaire emprisonnant l'actionneur 32 et destiné à venir reposer contre la face supérieure de la matelassure 12, tel que représenté sur la figure 1.

Cette enveloppe 33 comprend également une nappe 35 s'étendant dans le prolongement du corps principal 34 et prévue pour traverser de part en part une lumière 15 ménagée dans l'épaisseur de cette matelassure 12 (figure 3).

La nappe 35 emprisonne une pluralité de conducteurs reliant le circuit imprimé de l'actionneur 32 à un câble d'alimentation 37 destiné à être implanté sous la matelassure 12 et portant à son extrémité opposée à la nappe 35 un connecteur 38 permettant de réaliser le branchement du dispositif avertisseur 30 à un module électrique de commande implanté dans le véhicule et non représenté sur les figures.

Ce module de commande, associé à au moins un capteur apte à détecter certains événements extérieurs ou intérieurs à l'habitacle, est configuré pour envoyer un signal électrique au dispositif avertisseur 30 entrainant la vibration de l'actionneur 32 de sorte avertir le conducteur afin qu'il réagisse rapidement et de manière adéquate.

De préférence, ce module de commande, dont le détail de la réalisation est indifférent à l'invention, est conçu de telle sorte que les caractéristiques du signal transmis au dispositif avertisseur puisse varier en fonction des informations reçues en provenance du ou des capteurs de manière à moduler l'effet vibrant généré et à proportionner la réaction du conducteur.

L'enveloppe 33 comporte en outre deux bras 39 s'étendant depuis le corps principal 34, de part et d'autre de ce dernier, et comprenant chacun à leur extrémité distale respective un crochet de retenue 40 destiné à être introduit à force dans un évidement correspondant 16 ménagé dans la matelassure 12 pour assurer le maintien du corps principal 34 du dispositif avertisseur 30 contre la face supérieure de cette matelassure 12 (voir figures 1 et 4).

Chaque crochet de retenue 40 présente un profil en forme de T et comporte une âme centrale 41 s'étendant dans le prolongement d'un bras correspondant 39 ainsi que deux branches latérales 42 saillant symétriquement depuis l'extrémité libre de cette âme 41 et de part et d'autre de celle-ci.

Comme illustré sur la figure 4, chaque évidement 16 ménagé dans la matelassure 12 présente une forme générale de vase et comprend une portion supérieure étranglée apte à coopérer avec les deux branches latérales 42 d'un crochet 40 pour assurer la retenue du bras correspondant 39 du dispositif vibratoire 30.

L'enveloppe 33 est réalisée avantageusement à partir de deux films thermoplastiques (par exemple en polypropylène) prédécoupés aux dimensions adéquates et superposés de manière à prendre l'actionneur 32 en sandwich, ces deux films étant ensuite pressés à chaud avantageusement par calandrage pour les souder l'un à l'autre et entrainer leur déformation de sorte à créer un logement emprisonnant cet actionneur 32.

Afin d'améliorer le confort du conducteur et d'éviter que ce dernier ne soit gêné par la présence des patchs 31 dont les corps principaux 34 hébergeant les actionneurs 32 sont pris en sandwich entre la face supérieure de la matelassure 12 et la coiffe d'habillage 17 de la garniture d'assise 11, cette coiffe d'habillage 17 comprend une couche interne de mousse de polyuréthanne 18 rapportée contre la face inférieure de son revêtement externe 19 en textile (tissé ou non), en cuir ou en matière synthétique.

Cette couche de mousse présente une épaisseur comprise avantageusement entre 3 et 10 mm.

La figure 5 représente un dispositif avertisseur 30' conforme à une variante de réalisation de l'invention.

Dans la suite et sur cette figure 5, on a gardé les mêmes références pour les éléments identiques au premier mode de réalisation et on a ajouté un prime pour les éléments similaires.

Le dispositif avertisseur 30' est semblable au dispositif 30 décrit précédemment, si ce n'est que le patch 31' comporte plusieurs actionneurs 32 (en l'espèce quatre) emprisonnés dans le corps principal 34' de son enveloppe 33', ces actionneurs 32 étant alignés et reliés électriquement (en série et/ou en parallèle) par des connecteurs 43'.

La présence d'une pluralité d'actionneurs 32 permet ainsi d'augmenter la puissance vibratoire générée par le dispositif 30'.

Selon des variantes de réalisation non représentées, le nombre d'actionneurs que comporte le dispositif avertisseur peut être différent (par exemple égal à 2, 3 ou 5) de même que leur agencement dans le corps principal de l'enveloppe du patch.

Selon d'autres variantes de réalisation non représentées, le ou les actionneurs vibratoires sont de type ERM (actionneur à masse excentrique rotative).

Selon encore d'autres variantes de réalisation non représentées, le ou les actionneurs vibratoires sont de type EMP (actionneur à polymère électromécanique). Ces derniers, bien que d'un coût de revient plus élevé, présentent l'avantage d'être particulièrement fins (200 µm, voire moins) de sorte à permettre sans perte de confort la suppression de la couche de mousse de polyuréthanne rapportée contre la face inférieure du revêtement externe de la coiffe.

Selon encore d'autres variantes de réalisation non représentées, le nombre et/ou l'agencement des dispositifs avertisseurs sur la matelassure d'assise sont différents (ces derniers pouvant par exemple être implantés également sur les bourrelets latéraux).

On notera en outre que la matelassure de dossier peut également accueillir un ou plusieurs dispositifs avertisseurs selon l'invention.

D'une manière générale, on rappelle que la présente invention ne se limite pas aux formes de réalisation décrites et représentées, mais qu'elle englobe toute variante d'exécution à la portée de l'homme du métier.

## Revendications

1. Dispositif avertisseur par vibrations pour siège de véhicule comportant un patch vibrant (31 ; 31') destiné à être apposé sur la face supérieure de la matelassure d'assise ou de dossier (12) d'un dit siège, ledit patch (31 ; 31') comprenant au moins un actionneur vibratoire à commande électrique (32) abrité dans une enveloppe support souple (33 ; 33') ; ladite enveloppe support souple (33 ; 33') comportant un corps principal (34 ; 34') emprisonnant le ou lesdits actionneurs vibratoires (32),
**caractérisé en ce que** ladite enveloppe support souple (33 ; 33') comporte en outre au moins deux bras (39) s'étendant depuis ledit corps principal (34 ; 34'), de part et d'autre de ce dernier, et comprenant chacun un crochet de retenue (40) destiné à être introduit dans un évidement correspondant (16) ménagé dans ladite matelassure (12) pour assurer le maintien dudit corps principal (34 ; 34') contre la face supérieure de cette matelassure (12).

2. Dispositif avertisseur par vibrations selon la revendication 1, **caractérisé en ce que** chaque dit crochet de retenue (40) présente un profil en forme de T et comporte une âme centrale (41) s'étendant dans le prolongement d'un bras correspondant (39) ainsi que deux branches latérales (42) saillant symétriquement depuis l'extrémité libre de cette âme (41) et de part et d'autre de celle-ci.

3. Dispositif avertisseur par vibrations selon l'une des revendications 1 ou 2, **caractérisé en ce que** ladite enveloppe (33 ; 33') comprend également une nappe (35) s'étendant dans le prolongement dudit corps principal (34 ; 34') et prévue pour traverser une lumière (15) ménagée dans l'épaisseur de ladite matelassure (12), ladite nappe (35) emprisonnant une pluralité de conducteurs reliant le ou lesdits actionneurs vibratoires (32) à un câble d'alimentation (37) destiné à être implanté sous ladite matelassure (12).

4. Dispositif avertisseur par vibrations selon la revendication 3, **caractérisé en ce que** ledit câble d'alimentation (37) porte à son extrémité opposée à ladite nappe (35) un connecteur (38) permettant de réaliser le branchement dudit dispositif avertisseur à un module électrique de commande implanté dans ledit véhicule.

5. Dispositif avertisseur par vibrations selon l'une des revendications 1 à 4, **caractérisé en ce que** ladite enveloppe (33 ; 33') est réalisée dans un matériau thermoplastique.

6. Dispositif avertisseur par vibrations selon la revendication 5, **caractérisé en ce que** ladite enveloppe (33 ; 33') est obtenue à partir de deux films thermoplastiques superposés de manière à prendre le ou lesdits actionneurs vibratoires (32) en sandwich, et pressés à chaud pour les souder l'un à l'autre et entrainer leur déformation de sorte à créer un logement emprisonnant le ou lesdits actionneurs vibratoires (32).

7. Dispositif avertisseur par vibrations selon l'une des revendications 1 à 6, **caractérisé en ce que** ledit patch (31') comporte plusieurs dits actionneurs vibratoires (32) emprisonnés dans ledit corps principal (34') et reliés électriquement en série et/ou en parallèle par des connecteurs.

8. Dispositif avertisseur par vibrations selon l'une des revendications 1 à 7, **caractérisé en ce que** le ou lesdits actionneurs (32) sont de type à polymère électromécanique (EMP).

9. Garniture d'assise ou de dossier de siège de véhicule comportant une matelassure (12) recouverte d'une coiffe d'habillage (17), **caractérisée en ce qu'**elle comporte au moins un dispositif avertisseur (30 ; 30') selon l'une des revendications 1 à 8 dont le corps principal dudit patch (31 ; 31') est pris en sandwich entre la face supérieure de ladite matelassure (12) et ladite coiffe d'habillage (17), ladite matelassure (12) présentant en outre une pluralités d'évidements (16) coopérant chacun avec un dit crochet de retenue (40) pour assurer le maintien dudit corps principal (34 ; 34') contre la face supérieure de ladite matelassure (12).

10. Garniture d'assise ou de dossier selon la revendication 9, **caractérisée en ce que** ladite coiffe d'habillage (17) comprend un revêtement externe (19) et une couche interne de mousse (18) rapportée contre la face inférieure dudit revêtement externe (19).

## Patentansprüche

1. Schwingungswarnvorrichtung für einen Fahrzeugsitz, mit einem Schwingungspflaster (31; 31'), das dazu bestimmt ist, an der Oberseite der Polsterung des Sitzes oder der Rückenlehne (12) eines solchen Sitzes befestigt zu werden, wobei das Pflaster (31; 31') mindestens einen elektrisch gesteuerten Schwingungsantrieb (32) aufweist, der in einer flexiblen Trägerhülle (33; 33') untergebracht ist; wobei die flexible Trägerhülle (33; 33') einen Hauptkörper (34; 34') aufweist, der den oder die Schwingungsantriebe (32) einschließt
**dadurch gekennzeichnet, dass** die biegsame Stützhülle (33; 33') außerdem mindestens zwei Arme (39) umfasst, die sich von dem Hauptkörper (34; 34') zu beiden Seiten desselben erstrecken und jeweils einen Haltehaken (40) aufweisen, der dazu bestimmt ist, in eine entsprechende Aussparung (16) eingeführt zu werden, die in der Polsterung (12) ausgebildet ist, um sicherzustellen, dass der Hauptkörper (34; 34') gegen die Oberseite dieser Polsterung (12) gehalten wird.

2. Vibrationswarneinrichtung nach Anspruch 1, **dadurch gekennzeichnet, dass** jeder der genannten Haltehaken (40) ein T-förmiges Profil aufweist und einen zentralen Steg (41) umfasst, der sich in der Verlängerung eines entsprechenden Arms (39) erstreckt, sowie zwei seitliche Schenkel (42), die symmetrisch vom freien Ende dieses Stegs (41) und auf beiden Seiten davon abstehen.

3. Vibrationswarnvorrichtung nach einem der Ansprüche 1 oder 2, **dadurch gekennzeichnet, dass** die Hülle (33; 33') auch eine Folie (35) umfasst, die sich in der Verlängerung des Hauptkörpers (34; 34') erstreckt und dazu vorgesehen ist, durch einen in der Dicke der Polsterung (12) ausgebildeten Schlitz (15) zu verlaufen, wobei die Folie (35) eine Vielzahl von Leitern einschließt, die den/die Vibrationsaktuator(en) (32) mit einem Versorgungskabel (37) verbinden, das dazu bestimmt ist, unter die Polsterung (12) implantiert zu werden.

4. Vibrationswarneinrichtung nach Anspruch 3, **dadurch gekennzeichnet, dass** das Stromversorgungskabel (37) an seinem dem Blech (35) gegenüberliegenden Ende einen Steckverbinder (38) trägt, der den Anschluss der Warneinrichtung an ein im Fahrzeug installiertes elektrisches Steuermodul ermöglicht.

5. Vibrationswarneinrichtung nach einem der Ansprüche 1 bis 4, **dadurch gekennzeichnet, dass** die Umhüllung (33; 33') aus einem thermoplastischen Material hergestellt ist.

6. Schwingungswarnvorrichtung nach Anspruch 5, **dadurch gekennzeichnet, dass** die Hülle (33; 33') aus zwei thermoplastischen Folien hergestellt ist, die so übereinander liegen, dass sie den oder die Schwingungsantrieb(e) (32) sandwichartig einschließen, und heißgepresst ist, um sie miteinander zu verschweißen und ihre Verformung zu bewirken, so dass ein Gehäuse entsteht, das den oder die Schwingungsantrieb(e) (32) einschließt.

7. Vibrationswarnvorrichtung nach einem der Ansprüche 1 bis 6, **dadurch gekennzeichnet, dass** der Patch (31') eine Vielzahl der Vibrationsaktuatoren (32) umfasst, die in dem Hauptkörper (34') eingeschlossen und durch Verbinder elektrisch in Reihe und/oder parallel geschaltet sind.

8. Vibrationswarneinrichtung nach einem der Ansprüche 1 bis 7, **dadurch gekennzeichnet, dass** der/die Aktuator(en) (32) vom Typ elektromechanisches Polymer (EMP) ist/sind.

9. Fahrzeugsitzpolster oder -rückenlehnenverkleidung mit einer Polsterung (12), die von einer Abdeckkappe (17) bedeckt ist, **dadurch gekennzeichnet, dass** sie mindestens eine Warneinrichtung (30; 30') nach einem der Ansprüche 1 bis 8 aufweist, deren Hauptkörper (31 ; 31') zwischen der Oberseite der Polsterung (12) und der Abdeckkappe (17) eingeklemmt ist, wobei die Polsterung (12) außerdem eine Vielzahl von Ausnehmungen (16) aufweist, die jeweils mit einem Haltehaken (40) zusammenwirken, um sicherzustellen, daß der Hauptkörper (34; 34') gegen die Oberseite der Polsterung (12) gehalten wird.

10. Sitz- oder Rückenlehnenpolsterung nach Anspruch 9, **dadurch gekennzeichnet, dass** der Polsterbezug (17) eine äußere Abdeckung (19) und eine innere Schaumstoffschicht (18) umfasst, die an der Unterseite der äußeren Abdeckung (19) angebracht ist.

## Claims

1. Vibration warning device for a vehicle seat comprising a vibrating patch (31; 31') intended to be affixed to the upper face of the padding of the seat or backrest (12) of a said seat, the said patch (31; 31') comprising at least one electrically controlled vibratory actuator (32) housed in a flexible support envelope (33; 33'); the said flexible support envelope (33; 33') comprising a main body (34; 34') enclosing the said vibratory actuator or actuators (32)
**characterised in that** said flexible support envelope (33; 33') further comprises at least two arms (39) extending from said main body (34; 34'), on either side of the latter, and each comprising a retaining hook (40) intended to be introduced into a corresponding recess (16) provided in said padding (12) to ensure the holding of said main body (34; 34') against the upper face of this padding (12).

2. Vibration warning device according to claim 1, **characterized in that** each said retaining hook (40) has a T-shaped profile and comprises a central web (41) extending in the continuation of a corresponding arm (39) as well as two lateral branches (42) projecting symmetrically from the free end of this web (41) and on either side thereof.

3. Vibration warning device according to one of claims 1 or 2, **characterised in that** said casing (33; 33') also comprises a sheet (35) extending in the extension of said main body (34; 34') and provided to pass through a slot (15) made in the thickness of said padding (12), said sheet (35) trapping a plurality of conductors connecting said vibration actuator(s) (32) to a supply cable (37) intended to be implanted under said padding (12).

4. Vibration warning device according to claim 3, **characterised in that** said power supply cable (37) carries at its end opposite said sheet (35) a connector (38) enabling said warning device to be connected to an electrical control module installed in said vehicle.

5. Vibration warning device according to one of claims 1 to 4, **characterised in that** the said envelope (33; 33') is made of a thermoplastic material.

6. Vibration warning device according to claim 5, **characterised in that** the said envelope (33; 33') is obtained from two thermoplastic films superimposed in such a way as to sandwich the said vibratory actuator or actuators (32), and hot-pressed in order to weld them to each other and cause their deformation so as to create a housing trapping the said vibratory actuator or actuators (32).

7. A vibratory warning device according to any of claims 1 to 6, **characterised in that** said patch (31') comprises a plurality of said vibratory actuator(s) (32) enclosed in said main body (34') and electrically connected in series and/or in parallel by connectors.

8. Vibration warning device according to any of the claims 1 to 7, **characterized in that** said actuator(s) (32) are of the electromechanical polymer (EMP) type.

9. Vehicle seat cushion or backrest trim comprising a padding (12) covered by a cover (17), **characterised in that** it comprises at least one warning device (30; 30') according to one of claims 1 to 8, the main body of which patch (31 ; 31') is sandwiched between the upper face of the said padding (12) and the said covering cap (17), the said padding (12) furthermore having a plurality of recesses (16) each cooperating with a said retaining hook (40) to ensure that the said main body (34; 34') is held against the upper face of the said padding (12).

10. Seat or backrest padding according to claim 9, **characterized in that** said padding cover (17) comprises an outer covering (19) and an inner layer of foam (18) fitted against the lower face of said outer covering (19).
